# EUROPÄISCHE PATENTSCHRIFT

(11) **EP 2 986 764 B1**
(45) Veröffentlichungstag und Bekanntmachung des Hinweises auf die Patenterteilung: **12.08.2020**
(21) Anmeldenummer: 14712320.2
(22) Anmeldetag: 26.03.2014
(51) Int. Cl.: D01F 9/32

(54) **VERFAHREN UND VORRICHTUNG ZUR HERSTELLUNG VON UNIDIREKTIONALEN KOHLENSTOFFFASERGELEGEN**
METHOD AND DEVICE FOR PRODUCING UNIDIRECTIONAL CARBON FIBRE CLOTH
PROCÉDÉ ET DISPOSITIF DE FABRICATION DE NAPPES UNIDIRECTIONNELLES DE FIBRES DE CARBONE

(30) Priorität: 18.04.2013 DE 102013206983
(43) Veröffentlichungstag der Anmeldung: 24.02.2016
(73) Patentinhaber: Bayerische Motoren Werke Aktiengesellschaft, 80809 München (DE)
(72) Erfinder: PFITZER, Hanno, 84095 Furth (DE); BECHTOLD, Michael, 71297 Mönsheim (DE); MAIDL, Franz, 94574 Wallerfing (DE)
(86) Internationale Anmeldenummer: PCT/EP2014/056072
(87) Internationale Veröffentlichungsnummer: WO 2014/170107

(56) Entgegenhaltungen:
- EP-A1- 2 441 866
- CA-A1- 2 820 131
- JP-A- 2004 197 230
- US-A- 5 177 840
- US-A1- 2007 196 648

## Beschreibung

Die Erfindung betrifft ein Verfahren zur Herstellung von unidirektionalen Kohlenstofffasergelegen sowie eine Vorrichtung zu deren Herstellung.

Kohlenstofffasern - oder auch Kohle- bzw. Carbonfasern genannt - finden Verwendung zur Verstärkung von Kunststoffbauteilen aller Art. Insbesondere in der Luftfahrt, aber auch in verstärktem Maße in der Automobilindustrie wird dieser Werkstoff eingesetzt, um besonders leichte und dennoch sehr robuste Bauteile zu schaffen.

Die Herstellung der Kohlenstofffasern erfolgt in einer komplexen Prozesskette. Stark vereinfacht dargestellt, beginnt der Herstellungsprozess mit der Erzeugung des sogenannten "Precusors", der als Eingangsmaterial für den eigentlichen Herstellungsprozess der Kohlenstofffaser dient und üblicherweise ein textiles Garn beschreibt, das eine große Anzahl an Einzelfilamenten umfasst. Der Precursor wird nach seiner Herstellung üblicherweise einer Oxidationsbehandlung unterzogen. Hierbei durchläuft der Precursor eine erste Wärmebehandlung in einem Ofen, in dem der Precursor wechselweise erhitzt und anschließend abgekühlt wird. Nachfolgend wird der Precursor im Rahmen der sogenannten "Karbonisierung" einer zweiten Wärmebehandlung mit einer Temperatur zwischen 1600 und 1900°C unterzogen, um durch chemische Umwandlung aus dem Precursor ein Kohlenstofffaserbündel zu erzeugen.

Üblicherweise werden die auf diese Weise erzeugten Kohlenstofffaserbündel auf separate Einzelspulen aufgewickelt. Die Einzelspulen sind kompakt und können daher leicht zur Weiterverarbeitung transportiert werden. Jedoch sind für die Herstellung eines Geleges mehrere hundert Einzelspulen erforderlich, so dass ein Rüstvorgang zur Bestückung einer entsprechenden Produktionsanlage mit der entsprechenden Anzahl an Einzelspulen mehrere Stunden in Anspruch nehmen kann. Dies führt zu einer erheblich reduzierten Verfügbarkeit der Anlage sowie einer Verzögerung nachfolgender Prozesse.

Bei einem derartigen Vorgehen kann aufgrund des Aufwickelns der Kohlenstofffaserbündel auf die Einzelspulen und des späteren Abwickelns von den Einzelspulen nicht ausgeschlossen werden, dass die Faserbündel beschädigt und somit in ihrer Festigkeit geschwächt werden, so dass Schwachstellen entstehen, die aufwendig aussortiert werden müssen, um spätere fehlerhafte Bauteile zu vermeiden.

Zusätzlich werden hohe Anforderungen an die hierzu erforderliche Aufwickelvorrichtung gestellt, da eine üblicherweise bereits vor dem Aufwickeln vorgenommene Aufspreizung des Faserbündels auf eine definierte Breite auch nach der Abwicklung für die nachfolgenden Verarbeitungsschritte erhalten bleiben soll. Dies gestaltet sich jedoch äußerst schwierig, da es durch die Auf- und Abwickelvorgänge zu Relativverschiebungen der Einzelfasern des Faserbündels zueinander kommen kann. Beispielsweise können in den Randbereichen der Faserbündel angeordnete Einzelfasern in Richtung der Mitte des Faserbündels einklappen, so dass diese anschließend nicht mehr oder nur mit sehr großem Aufwand korrekt aufgespreizt werden können und somit ebenfalls Fehlerstellen in der Gelegeherstellung verursachen.

EP 2 441 866 A1 beschreibt die Herstellung eines unidirektionalen Prepregs. Hierzu werden Precursor-Bündel einem Ofen zur Stabilisierung zugeführt. Anschließend erfolgt ein zweistufiges Karbonisieren, bevor die einzelnen karbonisierten Faserbündel auf eine Trommel aufgewickelt werden. Von dieser Trommel werden die einzelnen Faserbündel später abgerollt und parallel zueinander angeordnet, um diese mit einem Epoxid Harz zu imprägnieren und den unidirektionalen Prepreg zu erzeugen.

Auch die JP 2004-197230 A1 beschreibt ein Verfahren zur Herstellung von Karbonfaserbündeln.

Die US 2007/0196648 A1 beschreibt unter anderem ein Verfahren zur Herstellung von Kohlenstoffasern sowie die Einbettung der hierbei erhaltenen Fasern in einen Harzfilm zur Erzeugung eines Laminats.

Aufgabe der Erfindung ist es daher die Prozesskette der Kohlenstofffaserherstellung bzw. der Herstellung der daraus gefertigten Gelege zumindest teilweise zu vereinfachen und eine Zuverlässigkeit zu erhöhen.

Diese Aufgabe wird gelöst mittels eines Verfahrens mit den Merkmalen des Patentanspruchs 1 sowie einer Vorrichtung mit den Merkmalen des Patentanspruchs 5. Vorteilhafte Ausführungsformen ergeben sich aus den jeweils abhängigen Patentansprüchen.

Demnach wird ein Verfahren zur Herstellung von unidirektionalen Kohlenstofffasergelegen mit mindestens den folgenden Schritten vorgeschlagen:
- Bereitstellen einer Anzahl von Precursorn, wobei jeder Precursor eine Mehrzahl von Einzelfilamenten umfasst,
- Karbonisieren der Anzahl von Precursorn zu einer Anzahl von Kohlenstofffaserbündeln, anschließendes
- Herstellen eines unidirektionalen Kohlenstofffasergeleges aus der Anzahl von Kohlenstofffaserbündeln, und anschließendes
- Aufwickeln des hergestellten unidirektionalen Kohlenstofffasergeleges, wobei der Schritt des Herstellens des unidirektionalen Kohlenstofffasergeleges in unmittelbarem Anschluss an den Schritt des Karbonisierens erfolgt, und
der Schritt des Herstellens des unidirektionalen Kohlenstofffasergeleges einen Schritt des Spreizens der jeweiligen Kohlenstofffaserbündel zu einem Band mit definierter Breite und einen Schritt des Verbindens der gespreizten Kohlenstofffaserbündel umfasst, und die gespreizten Kohlenstofffaserbündel in Randbereichen entlang ihrer Erstreckungsrichtung miteinander verbunden werden, wobei der Schritt des Verbindens durch Reibung oder Vibration erfolgt, so dass die Einzelfilamente zweier benachbarter bandförmig aufgespreizter Kohlenstofffaserbündel ineinander gleiten oder ineinandergreifen.

Dies bedeutet, dass mindestens zwei oder mehr Precursor durch Karbonisieren zu Kohlenstofffaserbündeln (sogenannten "Rovings") gewandelt werden. Vorzugsweise entspricht bei diesem Vorgang die Anzahl der Precursor der Anzahl der hieraus erzeugten Kohlenstofffaserbündel. Selbstverständlich kann durch Zusammenfassen oder Aufteilen der Precursor bzw. der Kohlenstofffaserbündel ebenso ein abweichendes Zahlenverhältnis erzielt werden.

Anschließend wird aus den Kohlenstofffaserbündeln ein unidirektionales Kohlenstofffasergelege (kurz: "Karbongelege") hergestellt und dieses zur weiteren Handhabung aufgewickelt. Als unidirektionales Kohlenstofffasergelege ist insbesondere ein Gelege aus unidirektional angeordneten Kohlenstofffaserbündeln zu verstehen. Beispielsweise weisen diese eine sogenannte 0°-Ausrichtung auf, sind also in Erstreckungsrichtung des Geleges orientiert und parallel zueinander ausgerichtet.

Der Schritt des Herstellens des unidirektionalen Kohlenstofffasergeleges erfolgt in unmittelbarem Anschluss an den Schritt des Karbonisierens. Dies ist derart zu verstehen, dass zwischen beiden Schritten kein erneutes Auf- oder Abwickeln der Kohlenstofffaserbündel auf Einzelspulen erfolgen soll. Vielmehr wird das Kohlenstofffasergelege als Zwischenprodukt dem Herstellungsprozess der Kohlenstofffaser entnommen. Insbesondere kann die Herstellung des Kohlenstofffasergeleges somit in einer Produktionslinie hergestellt und die Kohlenstoffaser in besonderer Weise vor einer Schwächung durch unnötige mechanische Belastungen geschützt werden.

Im Gegensatz zu einer bekannten Herstellung von Kohlenstofffaserbündeln bzw. deren Verarbeitung erfolgt also keine individuelle Aufwicklung jedes einzelnen Kohlenstofffaserbündels auf jeweils eine separate Einzelspule. Somit entfällt die besonders aufwendige bzw. fehleranfällige Aufwicklung der einzelnen Faserbündel, wodurch der Herstellungsprozess vereinfacht sowie eine Prozesssicherheit gesteigert werden kann, so dass Fehler im Gelege vermeiden werden können. Zusätzlich wird ein wiederholtes Umlenken und Aufwickeln auf die Einzelspulen bzw. ein nachfolgendes Abwickeln der Kohlenstofffaserbündel zur Herstellung von Zwischenprodukten, wie beispielsweise von Gelegen vermieden bzw. deren Häufigkeit reduziert und somit die Faser weniger strapaziert bzw. beschädigt. Insgesamt kann also eine Verbesserung der Materialeigenschaften erzielt werden, die eine Qualität des späteren Bauteils zugutekommt. Des Weiteren bietet das vorgeschlagene Verfahren den besonderen Vorteil einer besonderen Flexibilität, da eine Flächendichte des Kohlenstofffasergeleges unmittelbar beim Aufwickeln bedarfsgerecht variiert werden kann.

Vorzugsweise umfasst der Schritt des Aufwickelns ein Aufwickeln des hergestellten unidirektionalen Kohlenstofffasergeleges auf einen Teilkettbaum.

Somit wird eine leicht handhabbare und insbesondere leicht lager- und transportierbare Einheit geschaffen, die bereits das Gelege als Zwischenprodukt für eine spätere Weiterverarbeitung umfasst. Auf eine zwischengeschaltete Aufwicklung der Kohlenstofffaserbündel auf Einzelspulen kann somit verzichtet werden. Die nachfolgende Weiterverarbeitung kann ebenfalls vor Ort, insbesondere innerhalb derselben Produktionslinie oder zeitlich und räumlich unabhängig erfolgen. Besonders vorteilhaft wirkt sich in jedem Fall die einfache Bereitstellung aufgrund des Teilkettbaums aus, da dieser - im Gegensatz zu einer Bestückung mit Einzelspulen - eine schnelle und einfache Bestückung einer Verarbeitungsanlage ermöglicht.

So ist es beispielsweise möglich, dass dem Schritt des Aufwickelns ein Schritt des Abwickelns des unidirektionalen Kohlenstofffasergeleges nachgeordnet ist, um das unidirektionale Kohlenstofffasergelege zu einem Faserhalbzeug, insbesondere zu einem Gelege, Prepreg, duroplastischen Halbzeug und/oder thermoplastischen Halbzeug, weiterzuverarbeiten. Die genannten Faserhalbzeuge können unidirektionale oder multidirektionale Strukturen umfassen.

Es können somit in einem gemeinsamen Verfahren mehrere Fertigungsschritte von der Faserherstellung bis zu deren Weiterverarbeitung zum Halbzeug integriert werden, wodurch Produktionsabläufe hinsichtlich Zeit, Kosten und Aufwand optimiert werden.

Erfindungsgemäß umfasst der Schritt des Herstellens des unidirektionalen Kohlenstofffasergeleges einen Schritt des Spreizens der Kohlenstofffaserbündel und einen Schritt des Verbindens der gespreizten Kohlenstofffaserbündel. Hierbei wird das jeweilige Faserbündel durch eine Spreizeinheit zu einem Band mit definierter Breite (nachfolgend: gespreizte Kohlenstofffaserbündel) aufgefächert. Anschließend werden die gespreizten Kohlenstofffaserbündel in den Randbereichen entlang ihrer Erstreckungsrichtung miteinander verbunden. Dies kann durch Reibung oder Vibrationen erfolgen, so dass die Einzelfilamente zweier benachbarter bandförmig aufgespreizter Kohlenstofffaserbündel ineinander gleiten bzw. ineinandergreifen. In Abhängigkeit von der Anzahl der nebeneinander angeordneten aufgespreizten Kohlenstofffaserbündel ergibt sich auf diese Weise ein Kohlenstofffasergelege mit entsprechender Breite.

Gemäß einer weiteren bevorzugten Ausführungsform umfasst der Schritt des Karbonisierens einen Schritt des Oxidierens der Precursor und/oder einen Schritt der Oberflächenbehandlung der Kohlenstofffaserbündel. Im Rahmen des Oxidationsschrittes wird der Precuros wiederholt erwärmt und abgekühlt, um die chemische Struktur des Precursors zu verändern, bevor dieser karbonisiert wird. Die Oberflächenbehandlung des Kohlenstofffaserbündels erfolgt beispielsweise nachdem der Precursor karbonisiert wurde, durch Auftragen einer sogenannten "Schlichte" auf das Kohlenstofffaserbündel, die eine verbesserte Handhabung der Faserbündel sowie eine verbesserte Anhaftung einer Matrix an den Fasern ermöglicht.

Des Weiteren wird eine Vorrichtung zum Erzeugen des unidirektionalen Kohlenstofffasergeleges bereitgestellt, mit:
- Mindestens einer Wärmebehandlungseinheit zum Karbonisieren einer Anzahl von Precursorn zu einer Anzahl von Kohlenstofffaserbündeln,
- eine Spreizeinheit zum Aufspreizen der Kohlenstofffaserbündel zu einem Band mit definierter Breite,
- Einer Verbindungsanordnung zum Herstellen des unidirektionalen Kohlenstofffasergeleges aus den erzeugten Kohlenstofffaserbündeln, wobei die Verbindungsanordnung zum Verbinden der gespreizten Kohlenstofffaserbündel ausgebildet ist, wobei die gespreizten Kohlenstofffaserbündel in Randbereichen entlang ihrer Erstreckungsrichtung miteinander verbunden werden, wobei das Verbinden durch Reibung oder Vibration erfolgt, so dass die Einzelfilamente zweier benachbarter bandförmig aufgespreizter Kohlenstofffaserbündel ineinander gleiten oder ineinandergreifen, und
- Einem Teilkettbaum zum Aufwickeln des unidirektionalen Kohlenstofffasergeleges auf den Teilkettbaum.

Beispielsweise werden als Wärmebehandlungseinheit ein oder mehrere Öfen eingesetzt, die eine entsprechende Hitze zum Karbonisieren bereitstellen. Die Verbindungsanordnung ist dazu ausgestaltet, die einzelnen Kohlenstofffaserbündel gemäß der vorangehenden Beschreibung miteinander zu einem Kohlenstofffasergelege zu verbinden.

Außerdem ist dem Teilkettbaum die Spreizeinheit zum Aufspreizen der Kohlenstofffaserbündel vorgeschaltet. Dies bedeutet also, dass zwischen der Wärmebehandlungseinheit und der Verbindungsanordnung die Spreizeinheit vorgesehen ist.

Außerdem kann dem Teilkettbaum eine Imprägniereinheit zum Imprägnieren des unidirektionalen Kohlenstofffasergeleges nachgeschaltet sein. Somit kann im Anschluss an das Aufwickeln des Teilkettbaums eine Weiterbearbeitung durch Imprägnieren des Kohlenstofffasergeleges erfolgen, beispielsweise zur Erstellung von Prepregs.

Zusätzlich kann die Vorrichtung außerdem eine Bereitstellungseinheit zum Bereitstellen der Anzahl von Precursorn, eine Oxidationseinheit zum Oxidieren der Precursor und/oder eine Oberflächenbehandlungseinheit zur Oberflächenbehandlung der Kohlenstofffaserbündel umfassen.

Beispielsweise ist die Bereitstellungseinheit der Wärmebehandlungseinheit vorgeschaltet. Die optionale Oxidationseinheit wird vorzugsweise ebenfalls vor der Wärmebehandlungseinheit, jedoch nachfolgend zu einer gegebenenfalls vorgesehenen Bereitstellungseinheit angeordnet. Die Oberflächenbehandlungseinheit ist beispielsweise im Anschluss an die Wärmebehandlungseinheit vorsehbar.

Insgesamt ermöglicht die Integration des Teilkettbaums in die beschriebene Vorrichtung den Verzicht auf eine Vielzahl von Einzelspulen und entsprechenden Umlenkungen, wodurch neben einem reduzierten Rüstaufwand zusätzlich eine Reduzierung der Beschädigung der Fasern und somit eine deutliche Verbesserung der Gelege-Qualität erzielt wird.

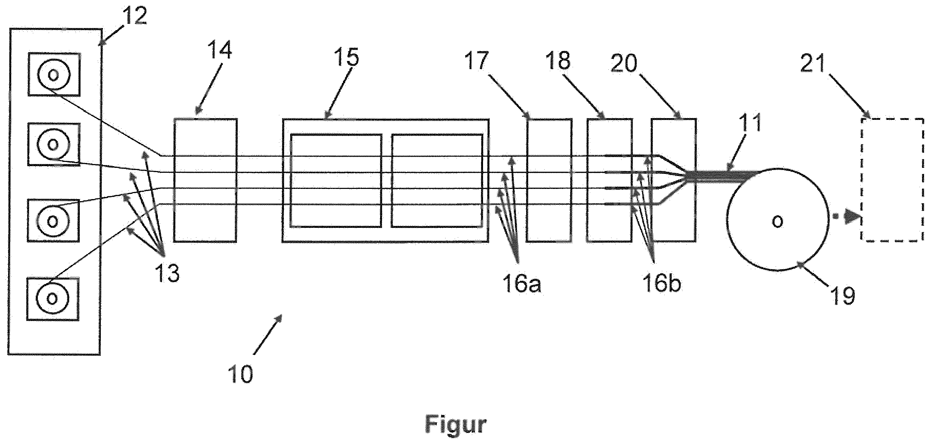

Die Erfindung wird nachfolgend unter Bezugnahme auf die einzige Figur anhand eines Ausführungsbeispiels näher erläutert.

Die Figur zeigt eine rein schematische Darstellung einer Vorrichtung 10 zum Erzeugen eines unidirektionalen Kohlenstofffasergeleges 11 mit einer Bereitstellungseinheit 12 zum Bereitstellen einer Anzahl von Precursorn 13, welche einer nachfolgenden Wärmebehandlungseinheit 15 (beispielsweise in Form zweier Öfen) zum starken Erhitzen der Anzahl von Precursorn zugeführt werden, um diese zu einer Anzahl von Kohlenstofffaserbündeln 16a zu karbonisieren. Selbstverständlich können lediglich ein oder mehr als zwei Öfen vorgesehen werden.

Die Vorrichtung 10 umfasst außerdem eine Spreizeinheit 18 zum Aufspreizen der Kohlenstofffaserbündel 16a zu bandförmigen bzw. gespreizten Kohlenstofffaserbündel 16b mit definierter Breite, wobei die gespreizten Kohlenstofffaserbündel 16b zum Herstellen des unidirektionalen Kohlenstofffasergeleges 11 in einer Verbindungsanordnung 20 miteinander verbunden werden. Anschließend wird das Kohlenstofffasergelege 11 einem Teilkettbaum 19 zugeführt wird. Hierbei erfolgt ein Aufwickeln des unidirektionalen Kohlenstofffasergeleges 11 auf den Teilkettbaum 19.

Außerdem umfasst die Vorrichtung 10 in der dargestellten Ausführungsform außerdem eine Oxidationseinheit 14 zum Oxidieren der Precursor 13 und eine Oberflächenbehandlungseinheit 17 zur Oberflächenbehandlung der Kohlenstofffaserbündel 16a. Im Rahmen des Oxidationsschrittes wird der Precuros 13 wiederholt erwärmt und abgekühlt, um die chemische Struktur des Precursors 13 zu verändern.

Dagegen erfolgt die Oberflächenbehandlung des Kohlenstofffaserbündels 16a beispielsweise nachgeordnet zu der Wärmebehandlungseinheit durch Auftragen einer sogenannten "Schlichte", die eine verbesserte Handhabung der Faserbündel sowie eine verbesserte Anhaftung einer Matrix an den Fasern ermöglicht.

Zusätzlich kann dem Teilkettbaum (19) eine Imprägniereinheit (21) zum Imprägnieren des unidirektionalen Kohlenstofffasergeleges (11) nachgeschaltet sein.

## Patentansprüche

1. Verfahren zur Herstellung von unidirektionalen Kohlenstofffasergelegen mit mindestens den folgenden Schritten:
- Bereitstellen einer Anzahl von Precursorn (13), wobei jeder Precursor (13) eine Mehrzahl von Einzelfilamenten umfasst,
- Karbonisieren der Anzahl von Precursorn (13) zu einer Anzahl von Kohlenstofffaserbündel (16a,16b), anschließendes
- Herstellen eines unidirektionalen Kohlenstofffasergeleges (11) aus der Anzahl von Kohlenstofffaserbündeln (16a,16b), und anschließendes
- Aufwickeln des hergestellten unidirektionalen Kohlenstofffasergeleges (11),
wobei der Schritt des Herstellens des unidirektionalen Kohlenstofffasergeleges (11) in unmittelbarem Anschluss an den Schritt des Karbonisierens erfolgt, und
der Schritt des Herstellens des unidirektionalen Kohlenstofffasergeleges (11) einen Schritt des Spreizens der jeweiligen Kohlenstofffaserbündel (16a) zu einem Band mit definierter Breite und einen Schritt des Verbindens der gespreizten Kohlenstofffaserbündel (16b) umfasst, und
die gespreizten Kohlenstofffaserbündel in Randbereichen entlang ihrer Erstreckungsrichtung miteinander verbunden werden, wobei der Schritt des Verbindens durch Reibung oder Vibration erfolgt, so dass die Einzelfilamente zweier benachbarter bandförmig aufgespreizter Kohlenstofffaserbündel ineinander gleiten oder ineinandergreifen.

2. Verfahren nach Anspruch 1, wobei der Schritt des Aufwickelns ein Aufwickeln des hergestellten unidirektionalen Kohlenstofffasergeleges (11) auf einen Teilkettbaum (19) umfasst.

3. Verfahren nach einem der vorhergehenden Ansprüche 1 bis 2, wobei dem Schritt des Aufwickelns ein Schritt des Abwickelns des unidirektionalen Kohlenstofffasergeleges (11) nachgeordnet ist, um das unidirektionale Kohlenstofffasergelege (11) zu einem Faserhalbzeug, insbesondere zu einem Gelege, Prepreg, duroplastischen Halbzeug und/oder thermoplastischen Halbzeug, weiterzuverarbeiten.

4. Verfahren nach einem der vorhergehenden Ansprüche 1 bis 3, wobei der Schritt des Karbonisierens außerdem einen Schritt des Oxidierens der Precursor (13) und/oder einen Schritt der Oberflächenbehandlung der Kohlenstofffaserbündel (16a, 16b) umfasst.

5. Vorrichtung zum Erzeugen eines unidirektionalen Kohlenstofffasergeleges mit:
- Mindestens einer Wärmebehandlungseinheit (15) zum Karbonisieren einer Anzahl von Precursorn (13) zu einer Anzahl von Kohlenstofffaserbündeln (16a),
- eine Spreizeinheit (18) zum Aufspreizen der Kohlenstofffaserbündel (16a) zu einem Band mit definierter Breite,
- Einer Verbindungsanordnung (20) zum Herstellen des unidirektionalen Kohlenstofffasergeleges (11) aus den erzeugten Kohlenstofffaserbündeln (16a,16b), wobei die Verbindungsanordnung (20) zum Verbinden der gespreizten Kohlenstofffaserbündel (16b) ausgebildet ist, wobei die gespreizten Kohlenstofffaserbündel (16b) in Randbereichen entlang ihrer Erstreckungsrichtung miteinander verbunden werden, wobei das Verbinden durch Reibung oder Vibration erfolgt, so dass die Einzelfilamente zweier benachbarter bandförmig aufgespreizter Kohlenstofffaserbündel (16b) ineinander gleiten oder ineinandergreifen, und
- Einem Teilkettbaum (19) zum Aufwickeln des unidirektionalen Kohlenstofffasergeleges (11) auf den Teilkettbaum (19).

6. Vorrichtung nach Anspruch 5, wobei dem Teilkettbaum (19) eine Imprägniereinheit (21) zum Imprägnieren des unidirektionalen Kohlenstofffasergeleges nachgeschaltet ist.

7. Vorrichtung nach einem der Ansprüche 5 oder 6, wobei die Vorrichtung (10) außerdem eine Bereitstellungseinheit (12) zum Bereitstellen der Anzahl von Precursorn (13), eine Oxidationseinheit (14) zum Oxidieren der Precursor (13) und/oder eine Oberflächenbehandlungseinheit (17) zur Oberflächenbehandlung der Kohlenstofffaserbündel (16a) umfasst.

## Claims

1. Method for producing unidirectional carbon fibre cloth, comprising at least the following steps:
- providing a number of precursors (13), each precursor (13) comprising a plurality of individual filaments,
- carbonizing the number of precursors (13) to form a number of carbon fibre bundles (16a, 16b), then
- producing a unidirectional carbon fibre cloth (11) from the number of carbon fibre bundles (16a, 16b), and then
- winding up the unidirectional carbon fibre cloth (11) produced,
wherein the step of producing the unidirectional carbon fibre cloth (11) is carried out immediately after the carbonization step, and
the step of producing the unidirectional carbon fibre cloth (11) comprises a step of spreading the respective carbon fibre bundles (16a) to form a band of defined width and a step of connecting the spread carbon fibre bundles (16b), and
the spread carbon fibre bundles are connected to one another in their edge regions along the direction of their extent, wherein the connecting step is carried out by means of friction or vibrations, so that the individual filaments of two adjacent carbon fibre bundles spread out in the form of a band slide into one another or interengage.

2. Method according to Claim 1, wherein the winding step comprises winding the unidirectional carbon fibre cloth (11) produced onto a back beam (19).

3. Method according to either of the preceding Claims 1 and 2, wherein a step of unwinding the unidirectional carbon fibre cloth (11) is arranged downstream of the winding step, in order to process the unidirectional carbon fibre cloth (11) further to form a semi-finished fibre product, in particular to form a cloth, prepreg, semi-finished thermosetting product and/or semi-finished thermoplastic product.

4. Method according to one of the preceding Claims 1 to 3, wherein the carbonization step additionally comprises a step of oxidizing the precursors (13) and/or a step of treating the surface of the carbon fibre bundles (16a, 16b).

5. Device for producing a unidirectional carbon fibre cloth, comprising:
- at least one heat treatment unit (15) for carbonizing a number of precursors (13) to form a number of carbon fibre bundles (16a),
- a spreading unit (18) for spreading out the carbon fibre bundles (16a) to form a band of defined width,
- a connecting arrangement (20) for producing the unidirectional carbon fibre cloth (11) from the carbon fibre bundles (16a, 16b) produced, wherein the connecting arrangement (20) is designed to connect the spread carbon fibre bundles (16b), wherein the spread carbon fibre bundles (16b) are connected to one another in their edge regions along the direction of their extent, wherein the connection is carried out by means of friction or vibrations, so that the individual filaments of two adjacent carbon fibre bundles (16b) spread out in the form of a band slide into one another or interengage, and
- a back beam (19) for winding the unidirectional carbon fibre cloth (11) onto the back beam (19).

6. Device according to Claim 5, wherein an impregnation unit (21) for impregnating the unidirectional carbon fibre cloth is connected downstream of the back beam (19).

7. Device according to either of Claims 5 and 6, wherein the device (10) additionally comprises a providing unit (12) for providing the number of precursors (13), an oxidizing unit (14) for oxidizing the precursors (13) and/or a surface treatment unit (17) for treating the surface of the carbon fibre bundles (16a) .

## Revendications

1. Procédé de fabrication de tissus de fibres de carbone unidirectionnels, le procédé comprenant au moins les étapes suivantes :
- fournir un certain nombre de précurseurs (13), chaque précurseur (13) comprenant une pluralité de filaments individuels,
- carboniser le nombre de précurseurs (13) pour obtenir un certain nombre de faisceaux de fibres de carbone (16a, 16b), puis
- produire un tissu de fibres de carbone unidirectionnel (11) à partir du nombre de faisceaux de fibres de carbone (16a, 16b), puis
- enrouler le tissu de fibres de carbone unidirectionnel (11) produit,
l'étape de production du tissu de fibres de carbone unidirectionnel (11) étant effectuée immédiatement après l'étape de carbonisation, et
l'étape de production du tissu de fibres de carbone unidirectionnel (11) comprenant une étape d'étalement des faisceaux de fibres de carbone respectifs (16a) pour obtenir une bande de largeur définie et une étape de liaison des faisceaux de fibres de carbone (16b) étalés, et
les faisceaux de fibres de carbone étalés étant reliés les uns aux autres dans des zones de bord le long de leur direction d'extension, l'étape de liaison étant effectuée par friction ou vibration de sorte que les filaments individuels de deux faisceaux de fibres de carbone adjacents, étalés en bande, se glissent les uns dans les autres ou s'engagent les uns dans les autres.

2. Procédé selon la revendication 1, l'étape d'enroulement comprenant un enroulement du tissu de fibres de carbone unidirectionnel (11) produit sur un faisceau de chaîne partiel (19).

3. Procédé selon l'une des revendications 1 et 2 précédentes, l'étape d'enroulement étant suivie d'une étape de déroulement du tissu de fibres de carbone unidirectionnel (11) pour soumettre le tissu de fibres de carbone unidirectionnel (11) à un traitement supplémentaire permettant d'obtenir un produit fibreux semi-fini, en particulier un tissu, un préimprégné, un produit semi-fini thermodurcissable et/ou un produit semi-fini thermoplastique.

4. Procédé selon l'une des revendications 1 à 3 précédentes, l'étape de carbonisation comprenant en outre une étape d'oxydation des précurseurs (13) et/ou une étape de traitement de surface des faisceaux de fibres de carbone (16a, 16b).

5. Dispositif de génération d'un tissu de fibres de carbone unidirectionnel, le dispositif comprenant :
- au moins une unité de traitement thermique (15) destinée à carboniser un certain nombre de précurseurs (13) pour obtenir un certain nombre de faisceaux de fibres de carbone (16a),
- une unité d'étalement (18) destinée à étaler les faisceaux de fibres de carbone (16a) pour obtenir une bande de largeur définie,
- un ensemble de liaison (20) destiné à produire le tissu de fibres de carbone unidirectionnel (11) à partir des faisceaux de fibres de carbone (16a, 16b) produits, l'ensemble de liaison (20) étant conçu pour relier les faisceaux de fibres de carbone étalés (16b), les faisceaux de fibre de carbone étalés (16b) étant reliés entre eux dans les zones de bord le long de leur direction d'extension, la liaison étant effectuée par frottement ou vibration de sorte que les filaments individuels de deux faisceaux de fibres de carbone (16b) adjacents, étalés en bande, glissent les uns dans les autres ou s'engagent les uns dans les autres,
- une ensouple sectionnelle (19) destinée à enrouler le tissu de fibres de carbone unidirectionnel (11) sur l'ensouple sectionnelle (19).

6. Dispositif selon la revendication 5, le faisceau de chaîne partiel (19) étant suivi d'une unité d'imprégnation (21) destinée à imprégner le tissu de fibres de carbone unidirectionnel.

7. Dispositif selon l'une des revendications 5 ou 6, le dispositif (10) comportant également une unité d'alimentation (12) destinée à fournir le nombre de précurseurs (13), une unité d'oxydation (14) destinée à oxyder les précurseurs (13) et/ou une unité de traitement de surface (17) destinée à traiter en surface les faisceaux de fibres de carbone (16a).
